# EUROPÄISCHE PATENTSCHRIFT

(11) **EP 0 914 293 B1**
(45) Veröffentlichungstag und Bekanntmachung des Hinweises auf die Patenterteilung: **22.03.2000**
(21) Anmeldenummer: 97931763.3
(22) Anmeldetag: 03.07.1997
(51) Int. Cl.: C01B 17/775

(54) **VERFAHREN ZUM HERSTELLEN VON SCHWEFELSÄURE**
METHOD OF MANUFACTURING SULPHURIC ACID
PROCEDE POUR FABRIQUER DE L'ACIDE SULFURIQUE

(30) Priorität: 12.07.1996 DE 19628169
(43) Veröffentlichungstag der Anmeldung: 12.05.1999
(73) Patentinhaber: METALLGESELLSCHAFT AKTIENGESELLSCHAFT, 60323 Frankfurt am Main (DE)
(72) Erfinder: SEITZ, Ekkehart, D-64342 Seeheim-Jugenheim (DE); MÜLLER, Hermann, D-95326 Kulmbach (DE); SCHMIDT, Georg, D-60431 Frankfurt am Main (DE)
(86) Internationale Anmeldenummer: EP9703520
(87) Internationale Veröffentlichungsnummer: WO9802380

(56) Entgegenhaltungen:
- EP-A- 0 028 848
- EP-A- 0 101 110
- WO-A-91/14651
- DE-A- 3 109 847
- DE-A- 19 522 927
- FR-A- 2 310 312

## Beschreibung

Die Erfindung betrifft ein Verfahren zum Herstellen von Schwefelsäure aus einem wasserdampfhaltigen Gasgemisch, welches SO₃ und H₂O im molaren Verhältnis von 1 : 1 und größer enthält und mit einer Temperatur von 300 - 600°C aus einer katalytischen SO₂-Oxydation kommt, wobei man das SO₃ und Wasserdampf enthaltende Gasgemisch durch einen Kondensator leitet, in welchem das Gemisch mit einem Kühlfluid indirekt gekühlt wird.

Ein solches Verfahren ist aus WO-A-9114651 bekannt. Viele Varianten der Herstellung von Schwefelsäure und Einzelheiten zu verschiedenen Verfahrensstufen, z.B. auch zur katalytischen SO₂-Oxydation, sind in Ullmann's Encyclopedia of Industrial Chemistry, 5. Auflage, Band A25, S. 647 - 664 beschrieben. Der Erfindung liegt die Aufgabe zugrunde, Schwefelsäure möglichst kostengünstig herzustellen. Dabei soll die Energie des wasserdampfhaltigen Gasgemisches, das aus der katalytischen SO₂-Oxydation kommt, nutzbar gemacht werden können.

Erfindungsgemäß gelingt dies beim eingangs genannten Verfahren dadurch, daß die Temperatur am Ausgang des Kondensators im Bereich von 180 bis 240°C liegt,daß im Kondensator mindestens 80 % der theoretisch möglichen Schwefelsäure gebildet und kondensiert und aus dem Kondensator mit einer H₂SO₄-Konzentration von mindestens 97 Gew.% abgeleitet werden, daß das Kühlfluid auf eine Temperatur von mindestens 130°C erwärmt aus dem Kondensator abgezogen wird, und daß man aus dem Kondensator ein SO₃-haltiges Gasgemisch abzieht, das Gasgemisch mit konzentrierter Schwefelsäure von 60 bis 120°C in direkten Kontakt bringt und konzentrierte Produkt-Schwefelsäure abzieht. Das im Kondensator verwendete Kühlfluid kann flüssig oder gasförmig sein, es kann sich z.B. um Kühlwasser oder Luft handeln.

Wenn das dem Kondensator zugeführte Kühlfluid Wasser ist, erzeugt man im Kondensator Wasserdampf von 2,5 bis 10 bar, bei dem es sich um ein wertvolles Produkt handelt. Dieser Wasserdampf kann z.B. zum Betreiben einer Turbine genutzt werden, die elektrische Energie erzeugt. Erfolgt die indirekte Kühlung im Kondensator mit Gas (z.B. Luft) so kann man auch hier die Energie des erwärmten Gases außerhalb des Kondensators nutzbringend weitergeben und z.B. vorgewärmte Luft als Verbrennungsluft verwenden.

Ausgestaltungsmöglichkeiten des Verfahrens werden mit Hilfe der Zeichnung erläutert. Es zeigt
Fig. 1 ein Fließschema des Verfahrens und
Fig. 2 einen als Elektrofilter ausgebildeten Kondensator.

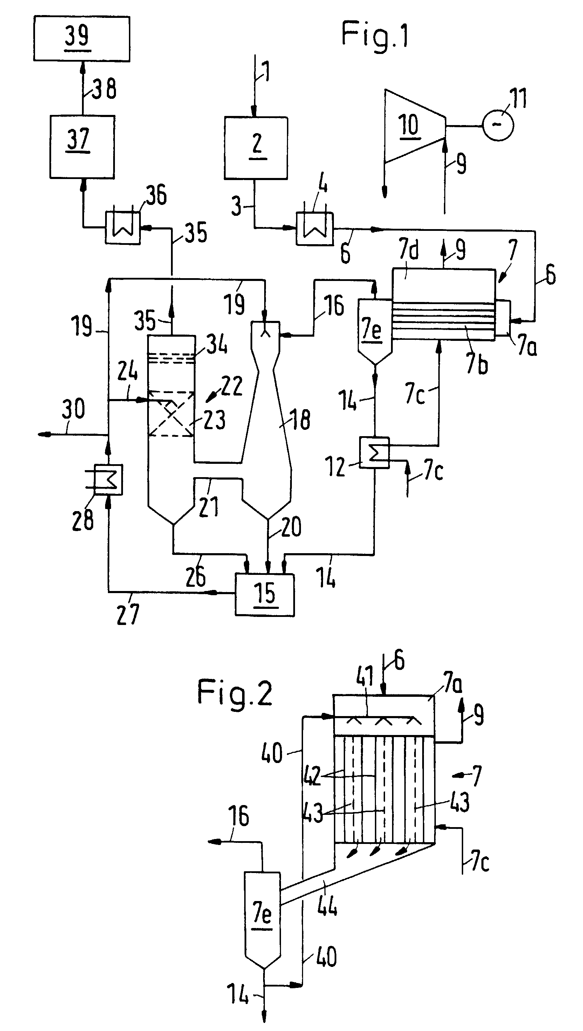

Durch die Leitung (1), vgl. Fig. 1, wird SO₂-haltiges Gas, z.B. aus einer Schwefel-Verbrennung oder einer anderen SO₂-Quelle herangeführt. Das Gas enthält üblicherweise auch noch Wasserdampf und Luft. Das Gas der Leitung (1) wird in einer ersten Anlage (2) zur katalytischen SO₂-Oxydation behandelt. Anlagen dieser Art sind bekannt. Mit einer Temperatur von üblicherweise 400 - 600°C verläßt ein SO₃ und Wasserdampf enthaltendes Gasgemisch die Anlage (2) in der Leitung (3) und wird zunächst durch einen indirekten Kühler (4) geführt, welcher der Vorkühlung des Gasgemisches dient. Das Gasgemisch der Leitung (3) enthält üblicherweise auch noch SO₂. Im Kühler (4) wird das Gasgemisch bis etwa auf Temperaturen von 300°C so weit gekühlt, daß noch keine Kondensation stattfindet. Der Kühler (4) ist zweckmäßig für die Rückgewinnung von Energie, doch ist er nicht unbedingt erforderlich.

Das wasserdampfhaltige Gasgemisch in der Leitung (6) weist eine Temperatur im Bereich von 300 - 600°C und einen Druck von 0,8 bis 2 bar auf. Dieses Gasgemisch wird im Kondensator (7) auf eine Temperatur im Bereich von 180 - 240°C gekühlt, wobei Schwefelsäure auskondensiert. Der Kondensator (7) weist eine Einlaßkammer (7a), ein Bündel etwa horizontaler Röhren (7b), eine Zufuhrleitung (7c) für Kühlfluid, eine Kühlfluidkammer (7d) und eine Auslaßkammer (7e) auf. Zweckmäßigerweise wird das Kühlfluid im Wärmeaustauscher (12) vorgewärmt, bevor es in den Kondensator (7) eintritt. Das im Kondensator auf eine Temperatur von mindestens 130°C und vorzugsweise mindestens 150°C erwärmte Kühlfluid strömt in der Leitung (9) ab. Wenn man als Kühlfluid Wasser durch die Leitung (7c) zuführt, erzeugt man Wasserdampf, der mit etwa 3 - 10 bar in der Leitung (9) abströmt. Der Wasserdampf gelangt im Verfahren der Zeichnung zu einer Entspannungsturbine (10), die einen elektrischen Generator (11) antreibt.

Während das SO₃ und Wasserdampf enthaltende Gasgemisch durch die Röhren (7b) strömt und dabei gekühlt wird, bildet sich zunächst dampfförmige Schwefelsäure. Im weiteren Verlauf der Kühlung in den Röhren (7b) kondensiert die gebildete Schwefelsäure und fließt mit einem H₂SO₄-Gehalt von etwa 98 bis 100 % zunächst in die Auslaßkammer (7e) und dann durch die Leitung (14) zu einem Sammelbehälter (15). Die Bedingungen im Kondensator (7) werden so gewählt, daß mindestens 80 % der theoretisch möglichen Schwefelsäure, die aus vorhandenem SO₃ plus H₂O gebildet werden kann, kondensiert und abgeleitet wird.

Aus der Auslaßkammer (7e) zieht man durch die Leitung (16) ein restliches SO₃ enthaltendes Gasgemisch ab, das üblicherweise auch noch O₂, SO₂ und Schwefelsäuredampf aufweist. Dieses Gasgemisch strömt in eine erste Kontaktzone (18) von der Art eines Venturiwäschers, die als SO₃-Absorber dient. Konzentrierte Schwefelsäure wird durch die Leitung (19) herangeführt und in die erste Kontaktzone (18) eingesprüht. Ablaufende Schwefelsäure gelangt durch die Leitung (20) in den Sammelbehälter (15). Die restlichen Gase strömen durch einen Verbindungskanal (21) in eine zweite Kontaktzone (22), einen SO₃-Absorptionsturm mit einer Füllkörperschicht (23) und einer Zufuhrleitung (24) für konzentrierte Schwefelsäure. In der Zone (22) strömen die Gase aufwärts im Kontakt zu abwärts rieselnder Schwefelsäure. Vom unteren Bereich der zweiten Kontaktzone (22) fließt die konzentrierte Schwefelsäure durch die Leitung (26) ebenfalls in den Sammelbehälter (15). Aus dem Behälter (15) zieht man in der Leitung (27) konzentrierte Schwefelsäure ab, führt sie durch einen indirekten Kühler (28) und bringt dabei die Temperatur der gekühlten Schwefelsäure in den Bereich 60 - 120°C und üblicherweise 70 - 100°C. Ein Teil der gekühlten Schwefelsäure wird als Produkt-Säure durch die Leitung (30) abgeführt, der weitaus größere Teil zirkuliert durch die Leitung (24) zur zweiten Kontaktzone (22) und durch die Leitung (19) zur ersten Kontaktzone (18). Üblicherweise liegt die Konzentration der Schwefelsäure in der Leitung (27) im Bereich von 97 - 99,5 Gew% H₂SO₄. Bei relativ kleinen Gasmengen in der Leitung (16) kann man auf die erste Kontaktzone (18) verzichten und das Gas direkt in den unteren Bereich der zweiten Kontaktzone (22) leiten, was aber in der Zeichnung nicht berücksichtigt ist.

Das in der zweiten Kontaktzone (22) aufwärts strömende Restgas gelangt zu einem Nebelabscheider (34) und verläßt dann die Kontaktzone in der Leitung (35). Dieses Gas ist praktisch frei von SO₃, Wasser- und Schwefelsäuredampf und weist vor allem noch SO₂ sowie auch O₂ auf. Man leitet das Restgas durch einen Wärmeaustauscher (36), wo es auf die Einlaßtemperatur von 380 - 420°C erwärmt wird, die in der anschließenden zweiten Anlage (37) zur katalytischen SO₂-Oxydation notwendig ist. Gebildetes SO₃-haltiges Gas führt man durch Leitung (38) zur weiteren Schwefelsäure-Herstellung in eine Endabsorptionsstufe (39), die z.B. in an sich bekannter Weise folgendermaßen arbeitet, was in der Zeichnung nicht im einzelnen dargestellt ist: Das Gas der Leitung (38) wird auf 140 - 200°C indirekt gekühlt und in einem SO₃-Absorptionsturm, der Füllkörper enthält, mit konzentrierter Schwefelsäure (98 - 99,5 Gew% H₂SO₄) berieselt. Die Anlage (37) und die Stufe (39) sind jedoch nicht in allen Fällen nötig und dienen vor allem der Einhaltung von Umweltschutzbestimmungen. An die Stelle der Anlage (37) und der Stufe (39) können auch an sich bekannte Gaswaschverfahren treten.

Die in Fig. 2 schematisch dargestellte Variante des Kondensators (7) ist als Naß-Elektrofilter ausgebildet. Das in der Leitung (6) herangeführte wasserdampfhaltige Gasgemisch wird in der Einlaßkammer (7a) mit Schwefelsäure aus der Leitung (40) und dem Verteiler (41) besprüht, um die Feuchtigkeit des Gases zu erhöhen, was für die Wirksamkeit des Elektrofilters wichtig ist. Das Elektrofilter weist zahlreiche Niederschlagselektroden (42) auf, die z. B. als Röhren ausgebildet sind, durch welche das Gasgemisch strömt. Die den Niederschlagselektroden zugeordneten Gegenelektroden in Form von Sprühdrähten (43) sind punktiert angedeutet. Das Kühlfluid, welches die Niederschlagselektroden umströmt, tritt durch die Leitung (7c) ein und durch die Leitung (9) aus. Durch das Elektrofilter werden Nebeltröpfchen sehr wirksam aus dem Gasgemisch entfernt. Gas und kondensierte Schwefelsäure fließen durch den Kanal (44) zur Auslaßkammer (7e), wobei das Gas in der Leitung (16) abströmt und in der zusammen mit Fig. 1 erläuterten Weise weiterbehandelt wird. Die Schwefelsäure fließt in der Leitung (14) ab, vgl. auch Fig. 1, und wird teilweise in der Leitung (40) zurückgeführt.

### Beispiele:

Es wird von einer der Zeichnung entsprechenden Anlage gemäß Fig. 1 ausgegangen, wobei man dem Kondensator (7) als Kühlmittel Wasser zuführt und in der Leitung (9) Sattdampf abzieht. Das Wasser ist in allen Fällen mit 105°C zulaufendes Kesselspeisewasser, das im Wärmeaustauscher (12) auf eine höhere Temperatur vorgewärmt wird. Auf die Anlagenteile (10), (11), (37) und (39) wird verzichtet. Die Daten sind teilweise berechnet.

### Beispiel 1:

Für die Erzeugung von 110 Tagestonnen H₂SO₄ wird von einem SO₂-Gas metallurgischen Ursprungs ausgegangen, das einer konventionellen Anlage (2) zur SO₂-Katalyse aufgegeben wird. Gasmengen, Gaskomponenten und Temperaturen in verschiedenen Leitungen finden sich in Tabelle I:

**Tabelle I:**

| **Leitung** | **3** | **6** | **16** | **35** |
|---|---|---|---|---|
| Gasmenge (Nm³/h) | 11 517 | 11 151 | 9 726 | 9 626 |
| SO₃ (kg/h) | 3 480 | 2 175 | 179 | < 0,1 |
| H₂O (kg/h) | 792 | 498 | - | - |
| H₂SO₄ (kg/h) | - | 1 599 | 517 | < 0,2 |
| Temperatur (°C) | 465 | 380 | 200 | 80 |

Das Kühlwasser in einer Menge von 3 500 kg/h wurde zunächst durch indirekten Wärmeaustausch mit dem Kondensat der Leitung (14) auf 140°C vorgewärmt, bevor es in den Kondensator (7) eintritt. In der Leitung (9) werden 3 356 kg/h Sattdampf von 7 bar abgezogen.

### Beispiel 2:

Für die Erzeugung von 500 Tagestonnen H₂SO₄ verwendet man SO₂-haltige Röstgase aus der Röstung von Zinkkonzentrat. Auf die Kontaktzone (18) wird verzichtet.

**Tabelle II:**

| **Leitung** | **3** | **6** | **16** | **35** |
|---|---|---|---|---|
| Gasmenge, Nm³/h) | 59 859 | 56 886 | 52 233 | 51 459 |
| SO₃ (kg/h) | 15 400 | 4 774 | 1 024 | - |
| H₂O (kg/h) | 3 363 | 972 | - | - |
| H₂SO₄ (kg/h) | - | 13 017 | 2 220 | < 0,6 |
| Temperatur (°C) | 490 | 320 | 205 | 80 |

Das Gas der Leitung (35) wird durch den Wärmeaustauscher (4) geführt. Das in einer Menge von 12 130 kg/h in den Kondensator (7) eintretende Kesselspeisewasser ist auf 150°C vorgewärmt. Es werden 10 178 kg/h Sattdampf von 7 bar erzeugt und über die Leitung (9) abgezogen.

### Beispiel 3:

Es wird ein Sauergas aus dem Entschwefelungsbetrieb einer Erdölraffinerie verarbeitet. Mit dem Gas wird flüssiger Schwefel verbrannt, um es mit SO₃ anzureichern. Der Kühler (4) dient der Überhitzung von gesättigtem Wasserdampf von 42 bar auf 360°C.

**Tabelle III:**

| **Leitung** | **3** | **6** | **16** | **35** |
|---|---|---|---|---|
| Gasmenge (Nm₃/h) | 13 206 | 13 138 | 12 349 | 12 277 |
| SO3 (kg/h) | 1 528 | 1 282 | 96 | < 0,5 |
| H₂O (kg/h) | 332 | 277 | - | - |
| H₂SO₄ (kg/h) | 439 | 740 | 198 | < 0,1 |
| Temperatur (°C) | 420 | 390 | 185 | 75 |

Aus 2 675 kg/h Wasser, das vorgewärmt auf 123°C in den Kondensator (7) eintritt, erzeugt man 2 620 kg/h Sattdampf von 5 bar. Im Kühler (36) werden 2600 kg/h Sattdampf von 42 bar von 253°C auf 360°C überhitzt.

### Beispiel 4:

Für die Erzeugung von 1 500 Tagestonnen H₂SO₄ wird von einem SO₂-Gas aus einer Golderzröstung ausgegangen.

**Tabelle IV:**

| **Leitung** | **3** | **6** | **16** | **35** |
|---|---|---|---|---|
| Gasmenge (Nm³/h) | 108 277 | 103 268 | 83 720 | 82 235 |
| SO₃ (kg/h) | 48 395 | 30 490 | 3 980 | < 2,0 |
| H₂O (kg/h) | 10 267 | 6 238 | - | - |
| O₂ (kg/h) | 12 524 | 12 524 | 12 524 | 12 524 |
| H₂SO₄ (kg/h) | - | 21 934 | 1 757 | < 1,2 |
| Temperatur (°C) | 463 | 370 | 190 | 85 |

Aus 40 000 kg/h Kesselspeisewasser, vorgewärmt auf 141°C, erzeugt man 38 700 kg/h Sattdampf von 7 bar, den man in der Leitung (9) abzieht.

## Patentansprüche

1. Verfahren zum Herstellen von Schwefelsäure aus einem wasserdampfhaltigen Gasgemisch, welches SO₃ und H₂O im molaren Verhältnis von 1 : 1 und größer enthält und mit einer Temperatur von 300 bis 600°C aus einer katalytischen SO₂-Oxydation kommt, wobei man das SO₃ und Wasserdampf enthaltende Gasgemisch durch einen Kondensator leitet, in welchem das Gemisch mit einem Kühlfluid indirekt gekühlt wird, wobei die Temperatur am Ausgang des Kondensators im Bereich von 180 bis 240°C liegt, im Kondensator mindestens 80% der theoretisch möglichen Schwefelsäure gebildet und kondensiert und aus dem Kondensator mit einer H₂SO₄-Konzentration von mindestens 97 Gew.% abgeleitet werden, das Kühlfluid auf eine Temperatur von mindestens 130°C erwärmt aus dem Kondensator abgezogen wird, und man aus dem Kondensator ein SO₃-haltiges Gasgemisch abzieht, das Gasgemisch mit konzentrierter Schwefelsäure von 60 bis 120°C in direkten Kontakt bringt und konzentrierte Produkt-Schwefelsäure abzieht.

2. Verfahren nach Anspruch 1, dadurch gekennzeichnet, daß das aus dem Kondensator zugeführte Kühlfluid Wasser ist und Wasserdampf von 2,5 bis 10 bar aus dem Kondensator abgezogen wird.

3. Verfahren nach Anspruch 1, dadurch gekennzeichnet, daß man das SO₃ und Wasserdampf enthaltende Gasgemisch einer Vorkühlung ohne Kondensatbildung unterzieht, bevor man das Gasgemisch in den Kondensator leitet.

4. Verfahren nach Anspruch 1, dadurch gekennzeichnet, daß der Kondensator als Elektrofilter mit gekühlten Elektroden ausgebildet ist.

5. Verfahren nach Anspruch 1, dadurch gekennzeichnet, daß der Energieinhalt des aus dem Kondensator abgezogenen Kühlfluids mindestens teilweise in elektrische Energie umgewandelt wird.

## Claims

1. A process for producing sulphuric acid from a gas mixture containing steam, which contains SO₃ and H₂O in a molar ratio of 1 : 1 and above, and results from catalytic SO₂ oxidation at a temperature of 300 to 600°C, wherein the gas mixture containing SO₃ and steam is passed through a condenser in which the mixture is indirectly cooled with a cooling fluid, wherein the temperature at the exit from the condenser is in the range from 180 to 240°C, at least 80% of the theoretically possible sulphuric acid is formed and condensed in the condenser and is withdrawn from the condenser at an H₂SO₄ concentration of at least 97% by weight, the cooling fluid is withdrawn from the condenser heated to a temperature of at least 130°C and an SO₃-containing gas mixture is withdrawn from the condenser, the gas mixture is brought into direct contact with concentrated sulphuric acid at 60 to 120°C and concentrated product sulphuric acid is withdrawn.

2. A process according to Claim 1, characterised in that the cooling fluid supplied from the condenser is water and steam at 2.5 to 10 bar is withdrawn from the condenser.

3. A process according to Claim 1, characterised in that the gas mixture containing SO₃ and steam is subjected to preliminary cooling without formation of condensate, before the gas mixture is passed into the condenser.

4. A process according to Claim 1, characterised in that the condenser is in the form of an electrostatic precipitator with cooled electrodes.

5. A process according to Claim 1, characterised in that the energy content of the cooling fluid withdrawn from the condenser is converted at least in part into electrical energy.

## Revendications

1. Procédé de production d'acide sulfurique à partir d'un mélange gazeux contenant de la vapeur d'eau, qui renferme SO₃ et H₂O en le rapport molaire de 1:1 et plus, et venant en ayant une température de 300 à 600°C d'une oxydation catalytique de SO₂, le mélange gazeux renfermant du SO₃ et de la vapeur d'eau passant dans un condenseur, dans lequel le mélange est refroidi de manière indirecte par un fluide de refroidissement, la température à la sortie du condenseur étant de l'ordre de 180 à 240°C, 80 % au moins de l'acide sulfurique que l'on peut former en théorie étant formés dans le condenseur et étant condensés, et étant retirés du condenseur en ayant une concentration en H₂SO₄ d'au moins 97 % en poids, le fluide de refroidissement étant réchauffé à une température d'au moins 130°C et étant soutiré du condenseur, et l'on soutire du condenseur un mélange gazeux renfermant du SO₃, on met le mélange gazeux en contact direct avec de l'acide sulfurique concentré d'une température de 60à120°C, et l'on soutire de l'acide sulfurique concentré en tant que produit.

2. Procédé suivant la revendication 1, caractérisé en ce que le fluide de refroidissement envoyé au condenseur est de l'eau, et on soutire du condenseur de la vapeur d'eau sous 2,5 à 10 bar.

3. Procédé suivant la revendication 1, caractérisé en ce que l'on soumet le mélange gazeux renfermant du SO₃ et de la vapeur d'eau. à un refroidissement préalable sans formation de produit condensé. avant d'envoyer le mélange gazeux au condenseur.

4. Procédé suivant la revendication 1, caractérisé en ce que le condenseur est constitué sous la forme d'un éléctrofiltre ayant des électrodes refroidies.

5. Procédé suivant la revendication 1, caractérisé en ce que l'on transforme la teneur en énergie du fluide de refroidissement soutiré du condenseur au moins en partie en énergie électrique.
